# FASCICULE DE BREVET EUROPEEN

(11) **EP 1 431 137 B1**
(45) Date de publication et mention de la délivrance du brevet: **01.04.2009**
(21) Numéro de dépôt: 03292677.6
(22) Date de dépôt: 27.10.2003
(51) Int. Cl.: B60R 22/195

(54) **Prétensionneur de ceinture de sécurité**
Sicherheitsgurtstraffer
Safety belt pretensioner

(30) Priorité: 20.12.2002 FR 0216347
(43) Date de publication de la demande: 23.06.2004
(73) Titulaire: SNPE Matériaux Energétiques, 75004 Paris (FR)
(72) Inventeur: Nadeau, Jean-Paul, 83190 Ollioules (FR); d'Emmanuelle, Laurent, 83200 Toulon (FR); Laspesa, Eric, 83140 Six-Fours (FR); Borg, Evrard, 83110 Sanary (FR)
(74) Mandataire: Le Roux, Martine

(56) Documents cités:
- GB-A- 1 438 929
- US-A- 3 901 531
- US-A- 5 676 397
- US-A- 6 036 274
- US-B1- 6 419 271

## Description

Le domaine technique de l'invention est celui des prétensionneurs de ceinture de sécurité dans les véhicules automobiles et plus spécialement ceux impliquant une charge pyrotechnique.

Généralement, les prétensionneurs connus de l'Etat de la Technique impliquent un actionneur pyrotechnique, une poulie et un cordon, ledit actionneur comportant un piston et un générateur de gaz pyrotechnique et ledit cordon étant relié, d'une part, à une boucle de fermeture d'une ceinture de sécurité et, d'autre part, au piston de l'actionneur. La mise à feu du générateur entraîne le déplacement du piston dans l'actionneur sans qu'il en sorte, ledit piston tirant alors le cordon, provoquant le rapprochement de ladite boucle de fermeture vers l'actionneur. Le mécanisme est facilité par une poulie autour de laquelle passe le cordon et favorisant ainsi le déplacement dudit cordon. Pour ce type de prétensionneur, la course du cordon est sensiblement la même que celle de l'actionneur.

Les prétentionneurs selon l'invention permettent d'accroître la course du cordon par rapport à celle de l'actionneur, ce qui les rend peu encombrants et particulièrement performants. Ils sont donc parfaitement adaptés aux véhicules automobiles pour lesquels un gain de place est en permanence recherché.

US 6419271 B1 décrit un prétensionneur de ceinture de sécurité selon le préambule de revendication 1.

L'objet de la présente invention concerne un prétensionneur de ceinture de sécurité dans un véhicule automobile comprenant un actionneur pyrotechnique muni d'un piston et un cordon dont une extrémité est reliée à une boucle de fermeture de ladite ceinture **caractérisé en ce que** l'actionneur se détend pour provoquer une courbure dudit cordon. De façon plus précise, la détente de l'actionneur s'effectue par l'intermédiaire du piston qui, sur un ordre donné, se déplace dans un sens qui accroît la longueur totale dudit actionneur incluant ledit piston, pour provoquer un enroulement partiel du cordon autour dudit piston. De cette manière, la course du cordon est supérieure à celle de l'actionneur.

Préférentiellement, le cordon est déjà tendu avant le fonctionnement du prétensionneur. Le but final de l'allongement de l'actionneur est de provoquer le déplacement de la boucle de fermeture de façon à tirer la ceinture pour mieux la serrer sur le corps du conducteur ou du passager.

Avantageusement, l'autre extrémité du cordon est reliée à une partie fixe du véhicule automobile.

De façon préférentielle, l'actionneur pyrotechnique comprend un corps creux incluant un générateur de gaz pyrotechnique et une chambre de coulissement dans laquelle est logé le piston, ladite chambre se trouvant en continuité dudit générateur.

De façon avantageuse le générateur de gaz comprend une charge pyrotechnique et un dispositif d'allumage de ladite charge.

Avantageusement, la charge pyrotechnique est constituée par un bloc de propergol dont le temps de combustion est sensiblement égal au temps de traction sur la ceinture par le cordon.

De façon préférentielle, l'actionneur comporte une chambre de combustion située entre le générateur de gaz pyrotechnique et le corps du piston, la dite chambre possédant un limiteur de pression. Ledit limiteur peut-être constitué, par exemple, par une soupape d'échappement conventionnelle.

Préférentiellement, le piston possède un corps prolongé par une tige de plus faible diamètre, le diamètre dudit corps étant sensiblement inférieur au diamètre interne de la chambre de coulissement et ledit corps comportant un joint d'étancheïté. De cette façon, le piston peut coulisser de manière étanche dans ladite chambre.

Ainsi, la production de gaz dans la chambre de combustion s'effectue pendant toute la durée de déplacement du piston poussoir, sans aucune déperdition parasite de gaz dans ladite chambre de combustion. Lorsque la pression dans ladite chambre atteint une valeur seuil, le limiteur de pression se déclenche pour évacuer le surplus de gaz, permettant au piston de se déplacer en fournissant un effort constant.

Avantageusement, la chambre présente une ouverture de laquelle émerge l'extrémité libre de la tige, ladite ouverture débouchant sur un étui de coulissement délimité par une paroi solide et traversé par le cordon.

De façon préférentielle, l'extrémité libre de la tige vient en appui contre le cordon, provoquant ainsi la tension dudit cordon.

Selon un mode de réalisation préféré de l'invention, le cordon fait sensiblement un angle droit de part et d'autre de ladite extrémité libre.

De façon avantageuse, ladite extrémité libre possède un embout élargi munie d'une gorge. De cette manière, le cordon, qui est destiné à passer dans ladite gorge ne présente aucun risque de glisser sur ledit embout et de se désolidariser de l'actionneur.

Préférentiellement, le déplacement du piston dans l'étui de coulissement provoque un enroulement partiel du cordon autour de l'extrémité libre dudit piston, permettant ainsi à la boucle de fermeture de la ceinture de se rapprocher de ladite enceinte.

Avantageusement, le piston se déplace jusqu'à ce que l'extrémité libre de la tige vienne en butée contre la paroi de l'étui de coulissement. De cette façon, le déplacement de la boucle de fermeture est constant.

Préférentiellement, le prétensionneur selon l'invention possède un dispositif de guidage du piston impliquant des ergots placés sur l'embout élargi et des ouvertures pratiquées dans la paroi de l'étui. Lesdits ergots émergent desdites ouvertures servant de rainures de guidage pour le piston lors de son déplacement dans l'étui.

Les prétensionneurs selon l'invention présentent l'avantage de pouvoir être montés sur une ceinture déjà existante en raison du découplage entre l'actionneur pyrotechnique et le cordon reliant la boucle de fermeture de la ceinture de sécurité. De plus, les actionneurs pyrotechniques impliquant un piston et qui accroissent leur longueur en raison du déplacement dudit piston, ont un fonctionnement fiable et performant en raison de la maîtrise de leur allumage et de la grande variabilité des compositions pyrotechniques pouvant être retenues pour lesdits actionneurs. Enfin, ils sont peu encombrants en raison de la taille réduite des charges pyrotechniques impliquées conservant leur performance dans des dispositifs miniaturisés.

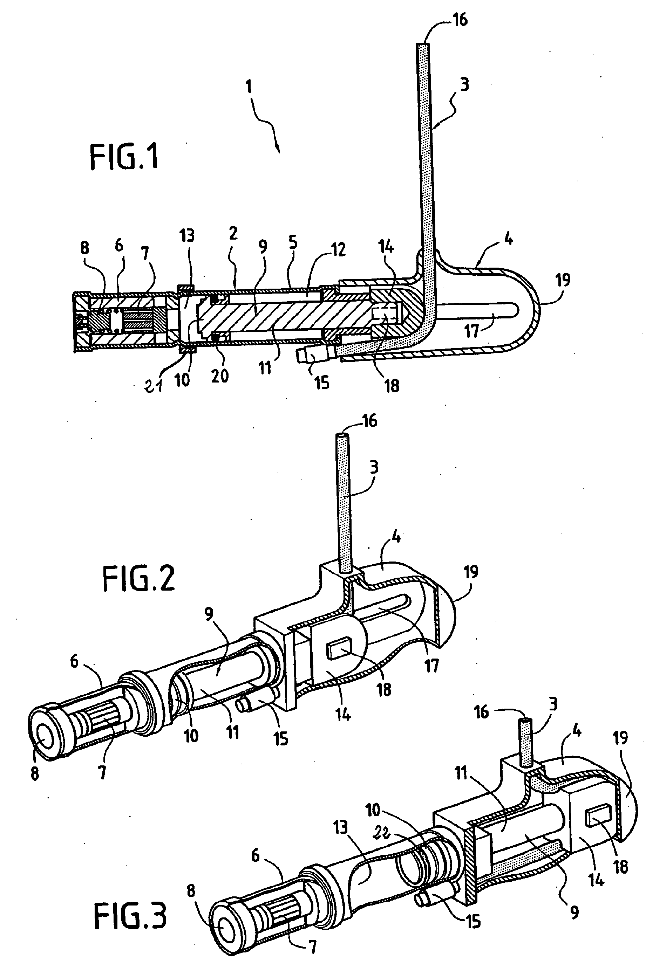

On donne ci-après la description détaillée d'un mode de réalisation préféré d'un prétensionneur de ceinture selon l'invention en se référant aux figurent 1 à 3.
La figure 1 est une vue en coupe axiale longitudinale d'un prétensionneur selon l'invention n'ayant pas encore fonctionné.
La figure 2 est une vue en perspective partielle d'un prétensionneur selon l'invention n'ayant pas encore fonctionné.
La figure 3 est une vue de l'actionneur de la figure 2 mais ayant fonctionné.
En se référant à la figure 1, un prétensionneur 1 de ceinture selon l'invention comprend un actionneur pyrotechnique 2, un cordon 3 déformable, et un étui 4 de coulissement. L'actionneur pyrotechnique 2 comprend un corps 5 cylindrique creux, distinguant une partie amont destinée à loger un générateur 6 de gaz pyrotechnique muni d'une charge pyrotechnique 7 et d'un système d'allumage 8 électropyrotechnique, et une partie aval en continuité de la partie amont et permettant de définir une chambre de coulissement 12 pour le piston 9. Ledit piston 9 possède un corps 10 cylindrique prolongé par une tige cylindrique 11 de plus faible diamètre, le diamètre dudit corps 10 étant sensiblement inférieur au diamètre interne de la chambre de coulissement 12. Entre la charge pyrotechnique 7 et le corps 10 du piston 9 subsiste un espace libre 13 situé dans la partie amont du corps 5 creux de l'actionneur 2, ledit espace 13 pouvant être assimilé à une chambre de combustion. La chambre de coulissement 12 présente une ouverture de laquelle émerge la tige 11 du piston 9, l'extrémité libre de ladite tige 11 comportant un embout élargi 14 analogue à un bouchon et possédant une gorge. L'ouverture de la chambre de coulissement 12 débouche sur l'étui 4 de coulissement de sorte que l'extrémité libre de la tige 11 comportant l'embout élargi 14 se retrouve dans ledit étui 4. L'étui 4 se présente sous la forme d'un boîtier allongé suivant un axe longitudinal et prolongeant le corps creux 5 de l'actionneur 2. L'étui 4 possède une ouverture latérale dont l'axe est perpendiculaire à l'axe longitudinal dudit étui 4 ainsi qu'une ouverture longitudinale dont l'axe est parallèle à l'axe longitudinal dudit étui 4, par lesquelles passe le cordon 3.De cette manière, le cordon 3 traverse l'étui 4 de coulissement. L'extrémité 15 du cordon 3 qui émerge de l'ouverture longitudinale est reliée à une partie fixe du véhicule automobile et l'extrémité 16 sortant de l'ouverture latérale de l'étui 4 est reliée à la boucle de fermeture de la ceinture de sécurité. Le piston 9 est positionné dans la chambre de coulissement 12 de sorte que l'embout élargi 14 vient en appui contre le cordon 3, ledit cordon passant par la gorge dudit embout 14 et faisant sensiblement un angle droit de part et d'autre dudit embout 14. Cette mise en appui provoque une tension dudit cordon 3. L'étui 4 de coulissement comprend deux faces planes longitudinales parallèles entre elles et opposées, possédant chacune une ouverture 17 longitudinale allongée parallèle l'une à l'autre. L'embout élargi 14 de l'extrémité libre de la tige 11 du piston 9, présente deux ergots 18 diamétralement opposés destinés à émerger chacun d'une ouverture 17 longitudinale de l'étui 4 de coulissement, lesdites ouvertures 17 longitudinales servant de rainures de guidage pour l'embout 14 élargi du piston 9. Ledit étui 4 possède une extrémité arrondie 19.

L'actionneur pyrotechnique 2 possède un dispositif anti-retour constitué d'une pluralité de billes 20 placées autour du corps 10 du piston 9 dans un espacement situé entre ledit corps 10 et la paroi interne de la chambre de coulissement 12, ledit espacement présentant une hauteur variable suivant l'axe de ladite chambre 12.

Le mode de fonctionnement d'un prétensionneur selon l'invention suit les étapes suivantes.

En se référant aux figures 1 et 2, la mise à feu du générateur 6 de gaz pyrotechnique provoque une accumulation de gaz dans l'espace 13 libre constituant la chambre de combustion. Au delà d'une pression seuil, le piston 9 se déplace dans la chambre 12 de coulissement en s'éloignant du générateur 6 de gaz, le dit piston 9 étant guidé par les ergots 18 de l'embout élargi 14 glissant dans les ouvertures 17 longitudinales allongées de l'étui 4.

Le piston 9 finit sa course lorsque l'embout élargi 14 de sa tige 11 vient en butée contre l'extrémité arrondie 19 de l'étui 4. Pendant le déplacement du piston 9 les billes 20 du dispositif anti-retour se sont coincées entre le corps 10 dudit piston 9 et le corps creux 5 de l'actionneur 2 dans l'espacement au niveau de sa hauteur la plus faible, empêchant tout déplacement inverse du piston 9 dans la chambre de coulissement 12. Durant le déplacement du piston 9 le cordon 3 a glissé dans la gorge de l'embout élargi 14, et s'est partiellement enroulé autour de l'extrémité libre dudit piston 9, qui s'est enfoncé dans l'étui 4 de coulissement. Le déplacement dudit piston 9 a pour conséquence un rapprochement de la boucle de fermeture placée au bout d'une extrémité 16 du cordon 3, vers ledit étui 4. Ce rapprochement cesse dès que l'embout élargi 14 vient en butée contre la partie arrondie 19 de l'étui 4. Pour cette configuration, la course de traction de la ceinture est deux fois plus élevée que celle de l'actionneur 2. En raison de la mise sous pression de la chambre de combustion 13 et du dispositif anti-retour 20, le piston 9 reste figé dans cette position finale de détente maximale.

## Revendications

1. Prétensionneur (1) de ceinture de sécurité dans un véhicule automobile comprenant un actionneur pyrotechnique (2) muni d'un piston (9) et un cordon (3) dont une extrémité (16) est reliée à une boucle de fermeture de ladite ceinture,
i - ledit actionneur pyrotechnique (2) comprenant un corps creux (5) incluant un générateur de gaz pyrotechnique (6) et une chambre de coulissement (12) dans laquelle peut se déplacer le piston (9), ladite chambre (12) se trouvant en continuité dudit générateur (6),
ii- ledit piston (9) possédant un corps (10) prolongé par une tige (11) de plus faible diamètre, le diamètre dudit corps (10) étant sensiblement inférieur au diamètre interne de la chambre de coulissement (12) et ledit corps (10) comportant un joint d'étanchéité (22),
iii - ladite chambre (12) présentant une ouverture de laquelle émerge l'extrémité libre de la tige (11), ladite ouverture débouchant sur un étui de coulissement (4) délimité par une paroi solide et traversé par le cordon (3) et ladite extrémité libre possédant un embout élargi (14) muni d'une gorge,
**caractérisé en ce que,**
ledit prétensionneur (1) possède un dispositif de guidage du piston (9) impliquant des ergots (18) placés sur l'embout élargi (14), et des ouvertures (17) pratiquées dans la paroi de l'étui (4).

2. Prétensionneur selon la revendication 1 **caractérisé en ce que** l'autre extrémité (15) du cordon (3) est reliée à une partie fixe du véhicule automobile.

3. Prétensionneur selon la revendication 1 ou 2, **caractérisé en ce que** le générateur de gaz (6) comprend une charge pyrotechnique (7) et un dispositif d'allumage (8) de ladite charge (7).

4. Prétensionneur selon l'une quelconque des revendications 1 à 3, **caractérisé en ce que** l'extrémité libre de la tige (11) vient en appui contre le cordon (3).

5. Prétensionneur selon l'une quelconque des revendications 1 à 4, **caractérisé en ce que** le cordon (3) fait sensiblement un angle droit de part et d'autre de ladite extrémité libre.

6. Prétensionneur selon la revendication 5 **caractérisé en ce que** le déplacement du piston (9) dans l'étui de coulissement (4) provoque un enroulement partiel du cordon (3) autour de l'extrémité libre dudit piston (9).

7. Prétensionneur selon l'une quelconque des revendications 1 à 6, **caractérisé en ce que** le piston (9) se déplace jusqu'à ce que l'extrémité libre de la tige (11) vienne en butée contre la paroi de l'étui de coulissement (4).

8. Prétensionneur selon l'une quelconque des revendications 3 à 7, **caractérisé en ce que** la charge pyrotechnique (7) est constituée par un bloc de propergol dont le temps de combustion est sensiblement égal au temps de traction sur la ceinture par le cordon (3).

9. Prétensionneur selon l'une quelconque des revendications 1 à 8, **caractérisé en ce que** l'actionneur (2) comporte une chambre de combustion (13) située entre le générateur (6) de gaz pyrotechnique et le corps (10) du piston (9), ladite chambre (13) possédant un limiteur de pression (21).

## Claims

1. A pretensioner (1) for a seat belt in a motor vehicle, which comprises a pyrotechnic actuator (2) fitted with a piston (9) and a lead (3), one end (16) of which is connected to a closure loop of the said belt,
i. where said pyrotechnic actuator (2) comprises a hollow body (5) with a pyrotechnic gas generator (6) and a sliding chamber (12) in which the piston (9) can move, with said chamber (12) being directly connected to said generator (6),
ii. where said piston (9) has a body (10) extended by a rod (11) of smaller diameter, with the diameter of said body (10) being substantially smaller than the inside diameter of the sliding chamber (12) and with said body (10) comprising a sealing gasket (22),
iii. where said chamber (12) has an opening from which the free end of the rod (11) emerges, with said opening running into a sliding case (4) formed by a solid wall and traversed by the lead (3) and said free end which has a widened ferrule (14) fitted with a throat,
**characterised in that,**
said pretensioner (1) has a guidance device for the piston (9) comprising lugs (18) placed on the widened ferrule (14) and openings (17) created in the wall of the case (4).

2. Tne pretensioner according to claim 1 **characterised in that** the other end (15) of the lead (3) is connected to a fixed part of the motor vehicle.

3. The pretensioner according to claim 1 or 2, **characterised in that** the gas generator (6) comprises a pyrotechnic charge (7) and a device (8) for igniting said charge (7).

4. The pretensioner according to any one of claims 1 to 3, **characterised in that** the free end of the rod (11) bears against the lead (3).

5. The pretensioner according to any one of claims 1 to 4, **characterised in that** the lead (3) makes a substantially right angle on either side of said free end.

6. The pretensioner according to claim 5, **characterised in that** the movement of the piston (9) in the sliding case (4) leads to partial winding of the lead (3) around the free end of said piston (9).

7. The pretensioner according to any one of claims 1 to 6, **characterised in that** the piston (9) keeps moving until the free end of the rod (11) comes up against the wall of the sliding case (4).

8. The pretensioner according to any one of claims 3 to 7, **characterised in that** the pyrotechnic charge (7) is composed of a propergol block, whose combustion time is more or less equal to the traction time by the lead (3) on the belt.

9. The pretensioner according to any one of claims 1 to 8, **characterised in that** the actuator (2) includes a combustion chamber (13) located between the pyrotechnic gas generator (6) and the body (10) of the piston (9), said chamber (13) being equipped with a pressure limiter (21)_{.}

## Patentansprüche

1. Straffer (1) eines Sicherheitsgurtes in einem Kraftfahrzeug, mit einem pyrotechnischen Aktuator (2), der mit einem Kolben (9) ausgestattet ist, und einem Seil (3), dessen eines Ende (16) mit einem Schloß des Gurtes verbunden ist,
i) wobei der pyrotechnische Aktuator (2) einen Hohlkörper (5) umfaßt, der einen pyrotechnischen Gasgenerator (6) sowie eine Schiebekammer (12), in der sich der Kolben (9) bewegen kann, einschließt, wobei die Kammer (12) sich in der Fortsetzung des Generators (6) befindet,
ii) wobei der Kolben (9) einen durch eine Stange (11) mit geringerem Durchmesser verlängerten Körper (10) aufweist, wobei der Durchmesser des Körpers (10) wesentlich kleiner ist als der Innendurchmesser der Schiebekammer (12) und der Körper (10) eine Dichtung (22) aufweist,
iii) wobei die Kammer (12) eine Öffnung aufweist, aus der das freie Ende der Stange (11) austritt, wobei die Öffnung in ein Schiebegehäuse (4) mündet, das durch eine feste Wand begrenzt ist und von dem Seil (3) durchquert wird, und wobei das freie Ende einen mit einer Nut versehenen erweiterten Ansatz (14) aufweist,
**dadurch gekennzeichnet, daß** der Straffer (1) eine Vorrichtung zum Führen des Kolbens (9) besitzt, die an dem erweiterten Ansatz (14) angeordnete Vorsprünge (18) sowie in der Wand des Gehäuses (4) ausgebildete Öffnungen (17) einschließt.

2. Straffer nach Anspruch 1, **dadurch gekennzeichnet, daß** das andere Ende (15) des Seils (3) mit einem festen Teil des Kraftfahrzeugs verbunden ist.

3. Straffer nach Anspruch 1 oder 2, **dadurch gekennzeichnet, daß** der Gasgenerator (6) eine pyrotechnische Ladung (7) und eine Vorrichtung (8) zum Zünden der Ladung (7) umfaßt.

4. Straffer nach einem der Ansprüche 1 bis 3, **dadurch gekennzeichnet, daß** das freie Ende der Stange (11) an dem Seil (3) in Anlage kommt.

5. Straffer nach einem der Ansprüche 1 bis 4, **dadurch gekennzeichnet, daß** das Seil (3) auf beiden Seiten des freien Endes im wesentlichen einen rechten Winkel bildet.

6. Straffer nach Anspruch 5, **dadurch gekennzeichnet, daß** die Bewegung des Kolbens (9) in dem Schiebegehäuse (4) ein teilweises Aufwickeln des Seils (3) um das freie Ende des Kolbens (9) bewirkt.

7. Straffer nach einem der Ansprüche 1 bis 6, **dadurch gekennzeichnet, daß** sich der Kolben (9) soweit bewegt bis das freie Ende der Stange (11) an der Wand des Schiebegehäuses (4) in Anschlag gelangt.

8. Straffer nach einem der Ansprüche 3 bis 7, **dadurch gekennzeichnet, daß** die pyrotechnische Ladung (7) von einem Treibstoffblock gebildet ist, dessen Verbrennungszeit im wesentlichen gleich der Zeit des Ziehens an dem Gurt durch das Seil (3) ist.

9. Straffer nach einem der Ansprüche 1 bis 8, **dadurch gekennzeichnet, daß** der Aktuator (2) eine zwischen dem pyrotechnischen Gasgenerator (6) und dem Körper (10) des Kolbens (9) gelegene Brennkammer (13) umfaßt, wobei die Kammer (13) einen Druckbegrenzer (21) aufweist.
